Europäisches Patentamt

European Patent Office

Office européen des brevets

(11) Publication number: **0 370 565**
**A1**

## EUROPEAN PATENT APPLICATION

(21) Application number: 89202896.0

(22) Date of filing: 15.11.89

(51) Int. Cl.⁵: **C05F 3/00**

(30) Priority: 15.11.88 NL 8802811

(43) Date of publication of application:
30.05.90 Bulletin 90/22

(84) Designated Contracting States:
BE DE FR GB IT NL

(71) Applicant: KEMIRA B.V.
Moezelweg 151 (Haven 5610)
NL-3198 LS Europoort-Rotterdam(NL)

(72) Inventor: Woudstra, J. 8(Jelle)
Alardusdreef 10
NL-3235 VC Rockanje(NL)

(74) Representative: de Bruijn, Leendert C. et al
Nederlandsch Octrooibureau
Scheveningseweg 82 P.O. Box 29720
NL-2502 LS 's-Gravenhage(NL)

(54) A method for the preparation of fertilizer.

(57) Method for preparing a fertilizer, in which animal excreta are treated with acid and, if desired, the liquid obtained is concentrated or processed to form a dry product, the animal excreta being brought to a pH of 3.5-5.5 with acid and after this pH has been established, an oxidizing agent such as $H_2O_2$ being added, and also manure produced in this manner.

EP 0 370 565 A1

**Method for preparing a fertilizer and also a fertilizer to be produced in this manner, and the use thereof**

The invention relates to a method for preparing a fertilizer, in which animal excreta are treated with acid and, if desired, the liquid obtained is concentrated or processed to form a dry product.

A method of this type is known from the Dutch Patent Application 73.13079. In said method, the animal excreta are brought to a pH of 0.1-2 with a mineral acid and digested for 24-60 hours. Then the liquid phase obtained is separated from the undissolved solids, after which the liquid freed of solids is adjusted to at least 5, preferably, however, 5.8-6.2, by adding a basic substance. It is stated that the final product has to have the said pH for biological reasons.

In the abovementioned known method a hydrolysis takes place at the said pH of 0.1-2. This serves to dissolve insoluble organic compounds. The liquid phase is separated from the material which has remained insoluble and is neutralized, so that, as the final fertilizer, a solution of nutriments is obtained which, if desired, is concentrated and dried. Poultry manure is preferably used as starting material.

However, the known method has a number of disadvantages. Thus, the liquid phase with a pH of 1.0-2 causes corrosion or erosion of structures made of concrete, calcareous sandstone, brickwork, steel and galvanized steel, which is particularly disadvantageous in the work of pig, cattle and dairy farmers, where a relatively simple and nonaggressive method is desirable for processing/recycling animal manure.

US Patent Specification 4,078,094 reveals a method for preparing an animal fodder or a fertilizer ingredient from animal (semi-liquid) manure. In this method, acid is added to the starting manure. Although sulphuric acid, phosphoric acid, nitric acid, phosphorous acid, nitrous acid and sulphurous acid are mentioned in this connection, hydrochloric acid is preferred. The acid is used in a concentration of 0.25-6.0 N. In relation to the quantity of acid used it is stated that this quantity has to be approximately equal on a molar basis to the quantity of essentially basic minerals which are contained in the starting manure. In addition, the quantity of acid used has to be large enough to bring about the desired sterilization. To eliminate, for example, Salmonella, a pH of 5 is mentioned. It is also stated that a lower pH is required to eliminate certain other bacteria. The object of said method is to form soluble salts and to separate the fertilizer liquid into a suspension which contains various solid fractions and a fraction containing acidic water.

US Patent Specification 4,369,199, which is linked to the abovementioned US Patent Specification, relates to a method for improving the living conditions of cattle by treating manure with acid. The same quantities and acids as above can be used. Hydrochloric acid is again preferred. Mention is made of acidification to a pH of 4.

French Patent Application 2,281,908 reveals a method for treating animal manure in which hydrogen peroxide is first added to the starting substance and the pH is then adjusted to a value of 4.0-8.0 with the aid of phosphoric acid, sulphuric acid or nitric acid. A preferred pH of 3.5-5.5 is mentioned. In this known method, the use of the oxidizing agent hydrogen peroxide in a quantity of 5-100 ppm is of essential importance.

The object of the invention is to eliminate the abovementioned disadvantages.

It has now been found that these disadvantages do not occur in a method as mentioned in the preamble, which is characterized in that the animal excreta are brought to a pH of 3.5-5.5 with acid and after this pH has been established, an oxidizing agent is added.

The addition of acid to manure having a liquid or paste-like nature, in particular semi-liquid manure, binds ammonia. It should, however, be noted as surprising that the mixture prepared according to the invention is stable over a very long period (not less than 4 months). means that no, or virtually no, reactions having a biological or chemical nature take place.

According to the invention, the pH is preferably 4.0-5.0. At a pH higher than 5.0, an increase in the biological/chemical/physical activity takes place. The physical activity relates in this connection to the development of gas in the acidified mixture.

In practice, the use of hydrogen peroxide as an oxidizing agent has proved extremely suitable. It is, however, also possible to use other oxidizing agents, for example ozone.

In the method according to the invention, a quantity of oxidizing agent is preferably added which is such that the redox potential in the mixture is equal to a redox potential which is established by a quantity of 1,000 ppm - 4% by weight, in particular 0.5-3.5% by weight, for example approximately 3% by weight of $H_2O_2$, based on the mixture. It will be clear that the quantity of the oxidizing agent will be dependent on the type of the starting manure and, for example, the solids content thereof.

In the case of the invention, it is important that the addition of the oxidizing agent takes place after establishing the desired pH. If oxidizing agent were to be added at the same time as, or before, the addition of acid, an appreciably larger quantity of oxidizing agent would be required than according to the method now found.

The method according to the invention can be successfully carried out at temperatures which are normal in farming, for example 5-30 °C. In general, the method will be carried out without using special facilities for cooling and/or heating.

In the method according to the invention, nitric acid and/or sulphuric acid is preferably used as acid. The nitrate ions supplied via the nitric acid are of importance for the desired quality of the final product, as are the sulphate ions in the case of sulphuric acid.

To prevent, limit or suppress foam formation, an antifoaming agent is added prior to, during or after the metered addition of the acid. Preferably, the acid and the antifoaming agent are added to the animal excreta at the same time. In general, the antifoaming agent is used in a quantity of 0.01-3% by weight, based on the weight of the total mixture.

Depending on the season (i.e. the fodder of the animals which produce the manure) and the manner or the object of reusing the animal manure, one or more further additives, for example ammonium chloride, ammonium nitrate, urea and phosphate compounds in liquid or solid form may also be used to increase the nitrogen and/or phosphate content. For fertilizer applications, it is also practical to use additives to increase the content of micronutrients.

The method according to the invention can be successfully used in the normal manure collection tanks below the stalls or in the immediate vicinity of the stalls for, for example, pigs, cattle and dairy cattle, and also in the storage tanks which are situated outside the stall installations. It is also possible to use the method according to the invention in the means of transport and spreading and dispensing systems which are normal in agriculture.

In the method according to the invention, any system can be used with which good mixing is obtained. For example, the mixture may be stirred.

The additives to be used according to the method of the invention, i.e. acid, antifoaming agent and any further additives, can be combined at various points/ in various ways with the animal excreta. Thus, in farming it is possible to introduce the additives into the animal excreta in the dung cellars beneath the stalls with the aid of a system which delivers the additives in a controlled manner.

It is also possible to introduce the additives into a portion of the liquid part of the animal manure. For this purpose, a portion of the liquid part is separated from the animal manure. In this cases the additives may, however, be added either before or after the separation of the liquid part.

In addition to mixing with the normal stirrers and mixers, it is also possible to bring about mixing by circulatory pumping.

The invention also relates to the products which can be obtained according to the method of the invention.

The manure to be obtained according to the invention is enriched in nitrogen compared with known worked-up manure products. The manure may be used directly in farming or be processed as a basic ingredient in the fertilizer industry.

It has been found that the method according to the invention yields an increase in the nitrogen content in the final product both in the case of pig manure and cattle manure. In the case of pig manure, this increase is approximately 2-5 kg of nitrogen per m³, and in the case of cattle manure it is approximately 1-3.5 kg of nitrogen per m³.

A beneficial effect of the method according to the invention is that the ammonia emission into the atmosphere is reduced. The odour quality of the manure is appreciably improved and the total emission of evil-smelling components is considerably reduced. Thus, tests have shown that the ammonia emission is reduced by approximately 50% during the storage period in the stall and by approximately 98% during and after the use of the manure above ground.

The manure treated according to the present invention has a nitrogen action which is much stronger than that of untreated manure. This implies that the value of the organic manure as nutriment for the crop increases appreciably (for example by more than a factor of 2.5). This results in a reduction in the leaching out of nitrate into the groundwater, which is very desirable from an environmental standpoint.

If a manure treated according to the invention is used, a much larger part of the nitrogen which was originally present in the manure and which is organically bound becomes available for the crop during the same season than in the case of untreated manure.

Application of treated manure to grassland produces less staining of the grass than application of untreated manure. After some time has elapsed, it is also found that less manure adheres to the grass after applying the manure treated according to the invention than after applying untreated manure.

It has furthermore been found that spreading untreated manure on grassland in the spring does not damage the sods.

From research it has further been found that the method according to the invention produces a highly liquid product, as a result of which it is possible to achieve an even distribution of the, product over the field, which is in general not possible with untreated manure.

The ammonia volatilization (as a percentage of the quantity of ammonium nitrogen applied with manure or with chemical manure) over a period of 6 days from untreated and treated cattle manure applied above ground and from chemical manure was measured by two methods, viz. the tunnel method and the mass balance method.

In the tunnel method a measurement is carried out in the field under "conditioned circumstances".

In the mass balance method, the emission measurement is carried out in the field, the weather conditions also having an effect. In the measurement in the case of the manure treated according to the invention, it began to rain approximately 4 hours after applying the manure. Although the ammonia emission may be counteracted as a result of this, there was a large difference in emission values in the case of manure which had been treated according to the invention and untreated manure. During the first 8 hours after the application, the ammonia emission was namely 19.2 and 0.2% for untreated and treated manure respectively. The results of the tests by the tunnel method and mass balance method are summarized in Table A.

Table A

| Method of measurement | Thin cattle manure | | Chemical manure |
|---|---|---|---|
| | Untreated (%) | Treated with additives (%) | |
| tunnel | 21 | 1.5 | 0.1 |
| mass balance | 19.5 | 0.4 | - |

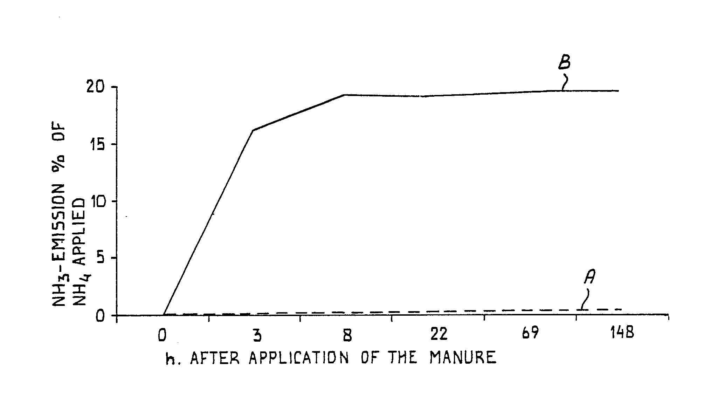

The cumulative ammonia emission (as a percentage of the quantity of ammonium applied with manure), in the case of untreated manure and manure treated according to the method of the invention, over a period of 6 days is shown graphically in Figure 1. In Figure 1, the ammonia emission in the case of manure treated according to the invention is indicated by A and that of untreated manure by the line B.

Tests were also carried out relating to the fertilization (kg/ha) on an intensive dairy farm having a cattle stock of 3 dairy cows per ha with overnight sheltering. This is understood to mean that the cattle remain in the pasture during the day in summer and for the remaining parts of the day and the rest of the year in the stall. The manure production in the stall was 45 tonnes per ha. The results of this test are summarized in Table B below.

Table B

| Element | Manure without additive | | Manure with additive: above-ground application |
|---|---|---|---|
| | above-ground application | injection | |
| N | | | |
| Recommended dose | 400 | 400 | 400 |
| In animal manure | 135 | 135 | 360[1]) |
| Minus volatilization | 90 | 45 | 0 |
| Chemical manure to be purchased | 355 | 310 | 40 |
| $P_2O_5$ | | | |
| Recommended dose | 105 | 126[2]) | 105 |
| In animal manure | 81 | 81 | 81 |
| Chemical manure to be purchased | 24 | 45 | 24 |
| $K_2O$ | | | |
| Recommended dose | 250 | 250 | 250 |
| In animal manure | 250 | 250 | 250 |
| Chemical manure to be purchased | 0 | 0 | 0 |

[1]) including the nitrogen from the additive
[2]) recommended dose increased because the phosphorous action of the manure is low in the case of injection, especially in the first cut.

When the method according to the invention is used farming, it is of great importance that no, or no appreciable, corrosion or erosion occurs at structures made of concrete, calcareous sandstone, brickwork, steel or galvanized steel which come into contact with the treated manure.

It must be understood that the invention is not limited to the abovementioned preferred embodiments but that many variants are possible without departing from the inventive idea.

**Claims**

1. Method for preparing a fertilizer, in which animal excreta are treated with acid and, if desired, the liquid obtained is concentrated or processed to form a dry product, characterized in that the animal excreta are brought to a pH of 3.5-5.5 with acid and after this pH has been established, an oxidizing agent is added.

2. Method according to Claim 1, characterized in that the pH is adjusted to 4.0-5.0.

3. Method according to Claim 1 or 2, characterized in that nitric acid and/or sulphuric acid is used as acid and hydrogen peroxide or ozone as oxidizing agent.

4. Method according to one or more of the preceding claims, characterized in that a quantity of oxidizing agent is added which is such that the redox potential in the mixture is equal to a redox potential which is established by a quantity of 1,000 ppm - 4% by weight, preferably 0.5-3.5% by weight of $H_2O_2$, based on the mixture.

5. Method according to one or more of the preceding claims, characterized in that an antifoaming agent is also added to the animal excreta, for example in a quantity of 0.01-3% by weight, based on the total weight of the mixture.

6. Method according to one or more of the preceding claims, characterized in that one or more additives are used to increase the nitrogen and/or phosphate content and/or the content of micronutrients.

7. Manure to be obtained according to the method of one of the preceding claims.

8. Use of manure according to Claim 7 in agriculture or in the fertilizer industry.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 281 908 (F.C. CORP.)<br>* Claims; page 3, lines 3-32; page 4, lines 17-33 * | 1-4,7,8 | C 05 F 3/00 |
| Y | | 5,6 | |
| Y | US-A-3 155 375 (J.E. VAUGHAM)<br>* Column 1, lines 20-36 * | 6 | |
| Y | FR-A-2 210 433 (THE ELECTRICITY COUNCIL)<br>* Claims; page 5, lines 37-39 * | 5 | |
| A | FR-A-2 359 631 (BUCHER-GUYER AG MASCHINENFABRIK) | | |
| X | US-A-3 918 404 (R.E. BUNGER)<br>* Column 5, lines 48-68; column 6, lines 42-64; claims * | 1,3 | |

TECHNICAL FIELDS SEARCHED (Int. Cl.5)

C 05 F
A 01 C

The present search report has been drawn up for all claims

| Place of search | Date of completion of the search | Examiner |
|---|---|---|
| THE HAGUE | 23-02-1990 | SCHUT,R.J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ................................................................
& : member of the same patent family, corresponding
    document

EPO FORM 1503 03.82 (P0401)